# EUROPÄISCHE PATENTANMELDUNG

(11) **EP 0 578 214 A1**
(43) Veröffentlichungstag der Anmeldung: **12.01.1994**
(21) Anmeldenummer: 93110833.6
(22) Anmeldetag: 07.07.1993
(51) Int. Cl.: B62J 9/00

(54) **Satteltasche für Fahrräder**

(30) Priorität: 08.07.1992 DE 9209142 U
(71) Anmelder: Dlugos, Gabriele, D-84172 Buch am Erlbach (DE)
(72) Erfinder: Dlugos, Achim, D-84172 Buch am Erlbach (DE)
(74) Vertreter: Gustorf, Gerhard, Dipl.-Ing.

(57) **Zusammenfassung**

Satteltasche (16) für Fahrräder mit einer Vorrichtung (18) zu ihrer Befestigung an wenigstens zwei Sattelstreben (14), welche auf der Oberseite (28) der Satteltasche (16) befestigt ist und zwei die Sattelstreben (14) übergreifende Flügel (32, 34) aufweist, die von einem gemeinsamen Steg (30) in entgegengesetzten Richtung abstehen. Die Flügel (32,34) haben unterschiedliche Längen und sind über den außermittig angeordneten, schmalen Steg (30) einstückig mit einer auf der Oberseite (28) der Satteltasche (16) befestigten Grundplatte (22) verbunden.

## Beschreibung

Die Erfindung betrifft eine Satteltasche für Fahrräder mit einer Vorrichtung zu ihrer Befestigung an wenigstens zwei Sattelstreben, welche auf der Oberseite der Satteltasche befestigt ist und zwei die Sattelstreben übergreifende Flügel aufweist, die von einem gemeinsamen Steg in entgegengesetzten Richtungen abstehen.

Aus der EP-OS 417 419 ist eine Befestigungsvorrichtung für Satteltaschen der eingangs umrissenen Bauart bekannt, bei der von einem verhältnismäßig breiten Steg zwei kurze, gleichlange Flügel abstehen. Der Steg liegt unmittelbar auf der Oberseite der Satteltasche auf und ist über eine an deren Innenseite anliegende Platte mit der Satteltasche verschraubt. Bei der Montage wird so vorgegangen, daß die Vorrichtung mit der Satteltasche zunächst schräg zwischen die beiden Sattelstreben gelegt und dann gedreht wird, bis die beiden Flügel die Sattelstreben übergreifen, die dabei gegen die Oberseite der Satteltasche gedrückt werden. Durch die Breite des Steges ist ein bestimmter Mindestabstand der beiden Sattelstreben vorgegeben. Bei zueinander parallelen Sattelstreben ist eine Befestigung nur möglich, wenn deren Abstand der Stegbreite entspricht, während bei divergierend angeordneten Sattelstreben die Satteltasche nur dann angebracht werden kann, wenn an einer Stelle der Abstand der beiden Sattelstreben der Stegbreite entspricht. Ein weiterer Nachteil der bekannten Vorrichtung besteht schließlich darin, daß die Sattelstreben unmittelbar zwischen den Flügeln und der Oberseite der Satteltasche eingeklemmt werden. Das bedeutet nicht nur einen vorzeitiger Reibungsverschleiß an der Oberseite der Satteltasche, sondern auch, daß bei schwierig zugänglichen, verhältnismäßig tief innerhalb des Sattels verlaufenden Sattelstreben eine Anbringung nur schwierig oder gar nicht möglich ist.

Der Erfindung liegt die Aufgabe zugrunde, eine Satteltasche mit Befestigungsvorrichtung der eingangs genannten Gattung zur Verfügung zu stellen, die eine Klemmbefestigung unabhängig von Abstand der Sattelstreben bei allen gängigen Fahrradsatteln zuläßt, selbst dann, wenn die Sattelstreben nur schwer zugänglich unter dem Sattel liegen.

Gemäß der Erfindung wird diese Aufgabe dadurch gelöst, daß die Flügel unterschiedliche Länge haben und über den außermittig angeordneten, schmalen Steg einstückig mit einer auf der Oberseite der Satteltasche befestigten Grundplatte verbunden sind.

Diese Lösung hat gegenüber dem Stand der Technik mehrere Vorzüge. Bei der Anbringung der Satteltasche wird diese nicht zuerst in einer schrägen Stellung zwischen die beiden Sattelstreben eingesetzt und dann gedreht, sondern der längere Flügel wird über eine der beiden Sattelstreben geschoben, bis diese an dem verhältnismäßig schmalen Steg zur Anlage kommt. Anschließend wird die Vorrichtung ohne Drehung in entgegengesetzter Richtung zurückgezogen, so daß die gegenüberliegende Sattelstrebe von dem kürzeren Flügel umfaßt wird. Aufgrund dieser Vorgehensweise bei der Befestigung können auch sehr nahe beieinanderliegende Sattelstreben als Halteorgane für die Satteltasche dienen, weil der Steg sehr schmal ist. Hinzu kommt, daß der Steg nicht unmittelbar auf der Oberseite der Satteltasche befestigt ist, sondern in eine Grundplatte übergeht, welche ihrerseits auf der Satteltasche angebracht ist. Dadurch steht die gesamte Vorrichtung verhältnismäßig weit nach oben ab und erlaubt die Befestigung auch an schwer zugänglichen, tief unter dem Sattel verlaufenden Sattelstreben. Nicht zuletzt findet keine Reibberührung zwischen den Sattelstreben und der Oberseite der Satteltasche statt, so daß das Material der Satteltasche geschont wird.

In Weiterbildung der Erfindung ist vorgesehen, daß in die dem längeren Schenkel gegenüberliegende Oberseite der Grundplatte und/oder in die dieser gegenüberliegende Unterseite des längeren Flügels parallel zueinander verlaufende Rillen zur Aufnahme einer der beiden Sattelstreben eingearbeitet sind. Diese Rillen können schräg verlaufen, wenn die Befestigung an zwei divergierenden Sattelstreben vorgesehen ist.

Durch die in der beschriebenen Weise vorgesehenen Rillen findet eine Befestigung mit Schnappsitz statt, die sehr stabil ist und selbst bei Fahrradtouren über längere Zeit und mit starken Schwingungen keine Lockerung befürchten läßt.

Nach einem weiteren Merkmal der Erfindung weist der kürzere Flügel an seinem freien Ende eine teilzylindrische Aussparung zum Übergreifen der anderen der beiden Sattelstreben auf. Auch diese Aussparung kann für den Fall divergierender Sattelstreben schräg verlaufen.

Es ist günstig, wenn die Aussparung durch einen die Elastizität des Steges erhöhenden Durchbruch von dem Steg getrennt ist. Auf diese Weise ist auch die Befestigung an Sattelstreben möglich, die stärker als gewöhnlich sind.

Um einen stabilen Sitz der Satteltasche zu gewährleisten, wenn diese aufgrund ihres Inhalts verhältnismäßig schwer ist, kann weiter vorgesehen sein, daß an der Oberseite der Satteltasche ein Klettverschlußband befestigt ist, dessen freies Ende durch eine Umlenkschnalle geführt ist. Dieses Klettverschlußband dient zur zusätzlichen Sicherung der Satteltasche am Sattelrohr, wobei das Festziehen und Fixieren aufgrund der Umlenkschnalle mit einer Hand durchgeführt werden kann.

Weitere Merkmale und Vorteile der Erfindung ergeben sich aus den Schutzansprüchen und aus der Beschreibung eines Ausführungsbeispiels, das in der Zeichnung dargestellt ist. Es zeigen:
Figur 1 die Ansicht eines Fahrradsattels mit daran angebrachter Satteltasche gemäß der Erfindung,
Figur 2 die vergrößerte Ansicht der Satteltasche mit Vorrichtung zu ihrer Befestigung,
Figur 3 eine nochmals vergrößerte Ansicht der Vorrichtung zur Befestigung der Satteltasche,
Figur 4 eine etwas verkleinerte Draufsicht auf die Vorrichtung gemäß Figur 3,
Figur 5 eine Schnittdarstellung in der Ebene V-V der Figur 3 und
Figur 6 eine Unteransicht der Grundplatte.

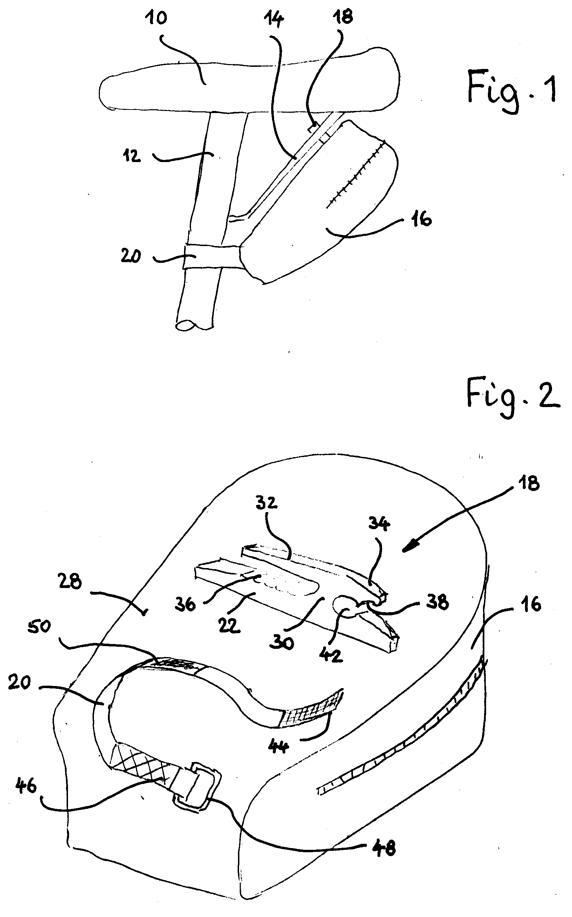

In Figur 1 ist ein Sattel 10 eines Fahrrads mit Sattelrohr 12 und zwei parallel oder schräg zueinander verlaufenden Sattelstreben 14 dargestellt; da die beiden Sattelstreben 14 bei der Darstellung der Figur 1 hintereinanderliegenden, ist selbstverständlich nur eine zu erkennen. Unterhalb des Sattels 10 ist eine im wesentlichen aus wasserdichtem Textilmaterial hergestellte Satteltasche 16 befestigt, und zwar mittels einer erfindungsgemäß ausgebildeten Vorrichtung 18, die zwischen die Sattelstreben 14 eingesetzt ist, und zusätzlich mit Hilfe eines Klettverschlußbandes 20, das um das Sattelrohr 12 geschlungen ist.

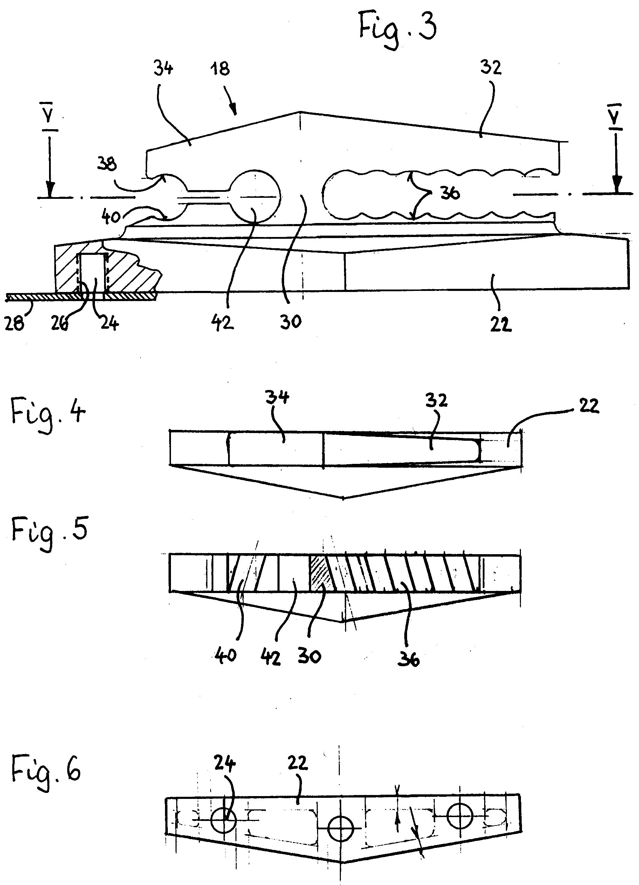

Die in den Figuren 2 bis 6 näher dargestellte Vorrichtung 18 ist einstückig aus Kunststoff hergestellt, vorzugsweise aus Polyamid mit etwa 10% GFK (glasfaserverstärkter Kunststoff). Sie hat eine längliche, an einer Seite dreieckförmige Grundplatte 22, welche gemäß Figur 6 an ihrer Unterseite Bohrungen 24 aufweist. In diese Bohrungen 24 sind, wie in Figur 3 angedeutet, Gewindebuchsen 26 eingesetzt, in welche Schrauben eingreifen, die von der Innenseite der Satteltasche 16 aus durch deren Oberseite 28 verlaufen und dadurch die Grundplatte 22 an der Oberseite 28 festklemmen. Eine alternative Art der Befestigung besteht darin, Schrauben mit selbstschneidendem Gewinde zu verwenden.

Von der Grundplatte 22 steht außermittig ein schmaler Steg 30 nach oben ab, der zu beiden Seiten von im wesentlichen teilzylindrischen Flächen begrenzt ist. Von diesem Steg 30 stehen in entgegengesetzten Richtungen zwei Flügel ab, und zwar entsprechend der außermittigen Anordnung des Steges 30 ein längerer Flügel 32 und ein kürzerer Flügel 34. Aus den Figuren 2, 3 und 5 geht hervor, daß in die dem längeren Flügel 32 gegenüberliegende Oberseite der Grundplatte 22 sowie in die dieser gegenüberliegende Unterseite des längeren Flügels 32 Rillen 36 eingearbeitet sind, die parallel zueinander verlaufen und jeweils paarweise Teile von Zylinderflächen sind. Im dargestellten Ausführungsbeispiel verlaufen diese Rillen 36 schräg. Der Abstand der einander gegenüberliegenden Rillen 36 entspricht dabei etwa dem Durchmesser einer Sattelstrebe 14.

In entsprechender Weise hat der kürzere Flügel 34 an seinem freien Ende eine teilzylindrische Aussparung 38, der eine entsprechend teilzylindrische Rille 40 auf der Oberseite der Grundplatte 22 gegenüberliegt. Wie Figur 5 zeigt, können auch die Aussparung 38 und die Rille 40 schräg verlaufen. Jedenfalls ergänzen sie sich zu einer teilzylindrischen Mantelfläche, wobei der Durchmesser auch hier etwa dem Durchmesser der Sattelstreben 14 entspricht. Die Aussparung 38 und die Rille 40 sind von dem Steg 30 durch einen einer Bohrung ähnlichen Durchbruch 42 getrennt, der die Elastizität des Steges 30 erhöht. Hierauf wird nachstehend noch näher eingegangen.

Bei der Befestigung der Satteltasche 16 zwischen zwei parallel oder schräg zueinander verlaufenden Sattelstreben 14 wird zunächst der längere Flügel 32 auf eine der beiden Sattelstreben 14 aufgeschoben, bis diese in der Nähe des Steges 30 liegt oder an diesem anschlägt. Sodann wird die Vorrichtung 18 und mit dieser die Satteltasche 16 in entgegengesetzter Richtung zurückgezogen, bis die Aussparung 38 und die Rille 40 über die gegenüberliegende Sattelstrebe 14 schnappt. In dieser blockierten Stellung wird auch der längere Flügel 32 fest gegen die entsprechende Sattelstrebe 14 gedrückt, die zwischen zwei einander gegenüberliegenden Rillen 36 sitzt.

Die Satteltasche 16 kann dann zusätzlich durch das Klettverschlußband 20 am Sattelrohr 12 festgezurrt werden, insbesondere dann, wenn sie einen schweren Inhalt trägt. Zu diesem Zweck wird das Ende 44 des Klettverschlußbandes 20 , welches mit seinem Anfangsbereich 46 auf der Satteltasche 16 festgenäht ist, durch eine Umlenkschnalle 48 gesteckt, die am freien Ende des Anfangsbereiches 46 angebracht ist. Sodann wird das freie Ende 44 des Klettverschlußbandes 20 fest angezogen und dann auf dem gegenüberliegenden Klettverschluß 50 im mittleren Bereich des Bandes 20 gedrückt.

## Patentansprüche

1. Satteltasche für Fahrräder mit einer Vorrichtung zu ihrer Befestigung an wenigstens zwei Sattelstreben, welche auf der Oberseite der Satteltasche befestigt ist und zwei die Sattelstreben übergreifende Flügel aufweist, die von einem gemeinsamen Steg in entgegengesetzten Richtung abstehen, dadurch gekennzeichnet, daß die Flügel (32,34) unterschiedliche Längen haben und über den außermittig angeordneten, schmalen Steg (30) einstückig mit einer auf der Oberseite (28) der Satteltasche (16) befestigten Grundplatte (22) verbunden sind.

2. Satteltasche nach Anspruch 1, dadurch gekennzeichnet, daß in die dem längeren Flügel (32) gegenüberliegende Oberseite der Grundplatte (22) und/oder in die dieser gegenüberliegende Unterseite des längeren Flügels (32) parallel zueinander verlaufende Rillen (36) zur Aufnahme einer der beiden Sattelstreben (14) eingearbeitet sind.

3. Satteltasche nach Anspruch 2, dadurch gekennzeichnet, daß die Rillen (36) schräg verlaufen.

4. Satteltasche nach einem der vorhergehenden Ansprüche, dadurch gekennzeichnet, daß der kürzere Flügel (34) an seinem freien Ende eine teilzylindrische Aussparung (38) zum Übergreifen der anderen der beiden Sattelstreben (14) aufweist.

5. Satteltasche nach Anspruch 4, dadurch gekennzeichnet, daß die Aussparung (38) schräg verläuft.

6. Satteltasche nach Anspruch 4 oder 5, dadurch gekennzeichnet, daß die Aussparung (38) durch einen die Elastizität des Steges (30) erhöhenden Durchbruch (42) von dem Steg (30) getrennt ist.

7. Satteltasche nach einem der vorhergehenden Ansprüche, dadurch gekennzeichnet, daß die Grundplatte (22) mittels Schrauben an der Oberseite (28) der Satteltasche (16) befestigt ist.

8. Satteltasche nach einem der vorhergehenden Ansprüche, dadurch gekennzeichnet, daß an der Oberseite (28) der Satteltasche (16) ein Klettverschlußband (20) befestigt ist, dessen freies Ende durch eine Umlenkschnalle (48) geführt ist.
